Europäisches Patentamt

European Patent Office

Office européen des brevets

(11) Veröffentlichungsnummer: **0 070 981**
**A1**

(12) # EUROPÄISCHE PATENTANMELDUNG

(21) Anmeldenummer: 82104071.4

(22) Anmeldetag: 11.05.82

(51) Int. Cl.³: **F 24 J 3/02**

(30) Priorität: 12.05.81 AT 2107/81

(43) Veröffentlichungstag der Anmeldung:
09.02.83 Patentblatt 83/6

(84) Benannte Vertragsstaaten:
BE CH DE FR IT LI NL

(71) Anmelder: Hefter, Arnold
An der Königswiese 6
A-2340 Mödling(AT)

(72) Erfinder: Hefter, Arnold
An der Königswiese 6
A-2340 Mödling(AT)

(74) Vertreter: Felgel-Farnholz, Richard, Dr.-Ing.
Heidelberger Landstrasse 1
D-6100 Darmstadt-Eberstadt(DE)

(54) Anlage und Kollektor zur Wärmegewinnung.

(57) Bei einem System zur Wärmegewinnung aus Sonnenstrahlung mittels Kollektoren, welche Absorber enthalten, von denen die erzeugte Wärme durch einen flüssigen Wärmeträger abgeleitet wird, sind die schmalen langgestreckten Kollektoren auf der den Sonnenstrahlen zugewendeten Seite von einer transparenten Platte abgedeckt und weisen sowohl auf der den Sonnenstrahlen zugewendeten als auch auf der von den Sonnenstrahlen abgewendeten Seite des Absorbers je einen in Längsrichtung verlaufenden, von Luft durchströmten Luftspalt auf, der die vorbeigeführte Außenluft entlang dem Absorber so führt, daß die Außenluft unmittelbar die Wand des Absorbers bestreicht. Es ist ferner eine Wärmepumpe vorgesehen, durch welche die niedrige Temperatur des Wärmeträgers auf den erforderlichen Wert erhöht werden kann, wenn das Angebot der auf den Kollektor auftreffenden Sonnenstrahlung zur Erreichung der erforderlichen Betriebstemperatur nicht ausreicht. Dieses System verwertet daher sowohl die direkte und diffuse Sonnenstrahlung als auch den Wärmeinhalt der Außenluft, der Luftfeuchte und der Latentwärme.

System
zur Wärmegewinnung aus Sonnenstrahlung
mittels Kollektoren

BEZEICHNUNG GEÄNDERT.
siehe Titelseite

Die vorliegende Erfindung betrifft ein System zur Wärmegewinnung aus Sonnenstrahlung mittels Kollektoren, welche Absorber enthalten, von denen die erzeugte Wärme durch einen flüssigen Wärmeträger abgeleitet wird.

Es sind bereits zahlreiche Systeme bekannt, welche die Strahlungsenergie der Sonne in nutzbare Wärme umwandeln (sogenannte Sonnenkollektoren). Grundsätzlich unterscheidet man Kollektoren, bei denen die Sonnenstrahlen mehr oder weniger auf das Absorbermedium konzentriert werden, und Kollektoren, bei denen die Sonnenstrahlung nicht gebündelt auf den Absorber gelangt. Dieses Kollektorsystem nützt neben der direkten Sonnenstrahlung auch einen Teil der diffusen Strahlung aus.

Die Umwandlung der Sonnenstrahlung in Wärme geschieht in einem Absorber, in der Regel einer geschwärzten Metallplatte oder einer schwarzen Flüssigkeit, dessen Temperatur durch die auftreffende Strahlung erhöht wird. Im erstgenannten Fall erfolgt die Ableitung der gewonnenen Wärme vom Absorber durch einen flüssigen Wärmeträger, der in einem Rohr- oder Kanalsystem zirkuliert, welches mit der Metallplatte in gut wärmeleitender Verbindung steht. Es können zum Beispiel mit der Metallplatte eine Anzahl Kupferrohre verlötet oder in einer Aluminiumplatte Kanäle integriert sein (sogenannte Rollbondplatine).

Es ist auch schon bekannt, die Kollektoren mit einer im Vergleich zu ihrer Länge geringen Breite als langgestreckte schmale Einzelelemente auszubilden, die parallel zueinander in ihrer Längsrichtung benachbart angeordnet
sind. (DE-OS 2 603 811, BBC AG, US-PS 2 857 634 Garbade).

In der Haustechnik werden Sonnenkollektoren vorwiegend zur
kostenlosen Bereitung von Warmwasser und zur Schwimmbadheizung verwendet. Für die Raumheizung ist die Sonnenstrahlung im Winter meist nicht ausreichend.

Außer den vorgenannten Systemen zur Wärmegewinnung aus
direkter und diffuser Sonnenstrahlung sind ferner Systeme
für den Wärmeentzug aus der Umwelt in Verbindung mit
Wärmepumpen bekannt. Als Wärmequellen dienen Grund- und
Brunnenwasser, Erdreich und Luft. Grund- und Brunnenwasser
weisen auch im Winter eine Temperatur über dem Gefrierpunkt auf. Nachteilig ist, daß der Grundwasserspiegel
ständig sinkt, oft ist die Erschließung nicht möglich,
oder die Behörden haben Bedenken wegen Verschmutzung. Der
Aufwand und damit die Kosten sind erheblich, besonders
bei Erdreich als Wärmeentzugsquelle. Luft als Wärmequelle
verursacht nur geringen Aufwand, ist jedoch nur wirtschaftlich bis zu Außentemperaturen von ca. 8 Grad.
Außerdem gibt es Probleme durch Vereisen der Verdampfer.

Die vorgenannten Systeme werden in Verbindung mit einer
Wärmepumpe vorwiegend für die Raumheizung verwendet. Mit
der Außenluft als Wärmequelle ist ihre Anwendung auf die
Übergangszeit mit ausreichender Außentemperatur beschränkt. Die Wärmepumpe benötigt etwa 25 bis 30 % der
gewonnenen Wärme für ihren Antrieb, meist in Form von
elektrischem Strom.

Eine bekannte Vorrichtung für den Wärmeentzug aus der
Außenluft (sogenannter Freiluftabsorber) besteht aus
einem Rohrsystem guter Wärmeleitfähigkeit, das mit
Lamellen zur Vergrößerung der wirksamen Oberfläche versehen ist.

0070981

Aufgabe der vorliegenden Erfindung ist eine Verringerung
der Betriebskosten bei geringen Anlagekosten eines Systems
zur Wärmegewinnung aus Sonnenstrahlung und damit eine
raschere Amortisation als bei den bisher bekannten Systemen.

Bei einem System zur Wärmegewinnung aus Sonnenstrahlung
mittels Kollektoren, welche Absorber enthalten, von denen
die erzeugte Wärme durch einen flüssigen Wärmeträger abgeleitet wird, sind erfindungsgemäß die langgestreckten
schmalen Kollektoren auf der den Sonnenstrahlen zugewendeten Seite von einer transparenten Platte abgedeckt und
weisen sowohl auf der den Sonnenstrahlen zugewendeten als
auch an der von den Sonnenstrahlen abgewendeten Seite der
Absorber je einen in Längsrichtung der Kollektoren verlaufenden von Luft durchströmten Luftspalt auf, der die
vorbeigeführte Außenluft so führt, daß die Außenluft unmittelbar die Wände des Absorbers bestreicht, und daß eine
Wärmepumpe vorgesehen ist, durch welche die niedrigere
Temperatur des Wärmeträgers auf den erforderlichen Wert
gebracht werden kann, wenn das Angebot der auf den Kollektor auftreffenden Sonnenstrahlung zur Erreichung der vorgesehenen Betriebstemperatur nicht ausreicht.

Bei dem System gemäß der Erfindung verwerten die in die
Kollektoren eingebauten Absorber sowohl die Energie aus
der Sonnenstrahlung als auch aus der Umwelt, aus der
Außenluft, Luftfeuchte und Latentwärme, zur Wärmegewinnung.

Bei ausreichender Sonnenstrahlung erwärmen sich die Absorber und damit der Wärmeträger auch bei niedriger
Außentemperatur so hoch, daß kostenlose Wärme über
Tauscherflächen an die Verbraucher abgegeben wird.

Bei ungenügender Sonnenstrahlung, z.B. bei bewölktem
Himmel, wird eine Wärmepumpe in den Kreislauf des Wärmeträgers eingeschaltet, welche die niedrigere Temperatur des Wärmeträgers auf die benötigte höhere Temperatur hinaufsetzt. In der Regel reicht die vorhandene diffuse Strahlung aus, um der Wärmepumpe Energie zuzuführen. Die Temperatur des Wärmeträgers und damit die Eingangstemperatur der Wärmepumpe liegt dabei über der Außentemperatur.

Dadurch ist die Leistungsziffer der Wärmepumpe (Verhältnis der aufgenommenen elektrischen Leistung zur abgegebenen Leistung) höher als beim Betrieb der Wärmepumpe mit Freiluftabsorber. Bei dem erfindungsgemäßen System wird somit für die Wärmepumpe auch die diffuse Sonnenstrahlung nutzbar gemacht.

Wird auch die diffuse Strahlung zu gering, z.B. bei Nacht, werden die Absorber in den Kollektoren durch den Wärmeträger unter die Umgebungstemperatur abgekühlt und die Absorber können somit den Wärmeinhalt der Außenluft aufnehmen. Bei der Kondensation von Luftfeuchte an den gekühlten Absorbern wird zusätzlich deren Kondensationswärme frei. Im Grenzbereich ist eine Eisbildung von einigen Millimetern an den Absorbern zulässig und beeinträchtigt kaum den Wärmeübergang, da Eis ein guter Wärmeleiter ist. Beim Einsetzen ausreichender Strahlung wird das Eis ohne Hilfsenergie rasch abgetaut.

Um die Außenluft an den in den Kollektoren enthaltenen Absorbern vorbeizuführen, ist gemäß der Erfindung sowohl auf der den Sonnenstrahlen zugewendeten, von einer transparenten Platte abgedeckten Vorderseite als auf der von den Sonnenstrahlen abgewendeten Rückseite der Absorber je ein Luftspalt vorgesehen. Bei Betrieb der Kollektoren als Luftwärmeabsorber wird die Außenluft mit Hilfe von Ventilatoren durch die Luftspalte geblasen. Zur Verbesserung des Wärmeüberganges zwischen Außenluft und Absorber können in einem Luftspalt Schikanen eingebaut sein, welche die Oberfläche des Absorbers vergrößern und eine turbulente Luftströmung bewirken. Durch die schmale und langgestreckte Form der Kollektoren ergibt sich ein guter Wärmeaustausch zwischen den Absorbern in den Kollektoren und der darüber strömenden Außenluft. Der Wärmeaustausch wird weiterhin verbessert, wenn die Strömung der Außenluft in den Luftspalten und die Strömung des flüssigen Wärmeträgers im Absorber in entgegengesetzten Richtungen verlaufen.

Die Richtung der Strömung des flüssigen Wärmeträgers im Absorber und die Richtung der Luftströmung an der Außenseite der Absorber wird mit Vorteil derart gewählt, daß der flüssige Wärmeträger in den in der Regel schräg oder senkrecht angeordneten Kollektoren von unten nach oben strömt. Der Wärmeträger wird dann umso wärmer und damit leichter, je höher er in den Kanälen der Absorber steigt, was die Strömung der Wärmeträger begünstigt.

In der Haustechnik kann das erfindungsgemäße System zur Bereitstellung von Warmwasser, zur Erwärmung von Schwimmbädern und zur Raumheizung Verwendung finden. Die Zuschaltung der Wärmepumpe wird vorzugsweise selbsttätig in Abhängigkeit von der Temperatur des Wärmeträgers bewirkt, wenn diese infolge eines ungenügenden Strahlungsangebotes unter den benötigten Mindestwert von z.B. 50 Grad sinkt.

Auch die Einschaltung der Ventilatoren zur Erzwingung einer Luftströmung in den Luftspalten der Kollektoren kann selbsttätig bewirkt werden, wenn die Temperatur des Wärmeträgers niedriger wird als die Außentemperatur.

Als flüssiger Wärmeträger wird vorzugsweise eine Mischung von Wasser mit einem Frostschutzmittel, z.B. Glycol, verwendet.

Weitere Einzelheiten und Vorteile des erfindungsgemäßen Systems sollen nachstehend anhand der Anwendungs- und Ausführungsbeispiele darstellenden Figuren genauer erläutert werden. Von diesen zeigt:

Fig. 1   Anwendung bei einem Schrägdach in Seitenansicht (schematisch),

Fig. 2 Anwendung bei einem Schrägdach in einer Ansicht von oben (schematisch),

Fig. 3 Anwendung bei einem Flachdach in einer Ansicht auf die Längsseiten der Kollektoren (schematisch),

Fig. 4 Anwendung bei einem Flachdach in einer Ansicht auf die Schmalseiten der Kollektoren (schematisch),

Fig. 5 Anwendung bei einer senkrechten Wand (Fassade) in einer Vorderansicht (schematisch),

Fig. 6 Anwendung bei einer senkrechten Wand (Fassade) in einer Seitenansicht (schematisch),

Fig. 7 Kollektor (Einzelelement) für das erfindungsgemäße System mit selbsttragender Glaswanne im Querschnitt,

Fig. 8 Kollektor (Einzelelement) mit einem Absorber aus Edelstahl mit integrierten Kanälen zum Durchfluß des Wärmeträgers im Querschnitt,

Fig. 9 Absorber aus Edelstahl in einer Draufsicht (zur Erhöhung der Deutlichkeit nicht in voller Länge),

Fig. 10 Teilansicht eines Querschnittes durch den Absorber nach Fig. 9.

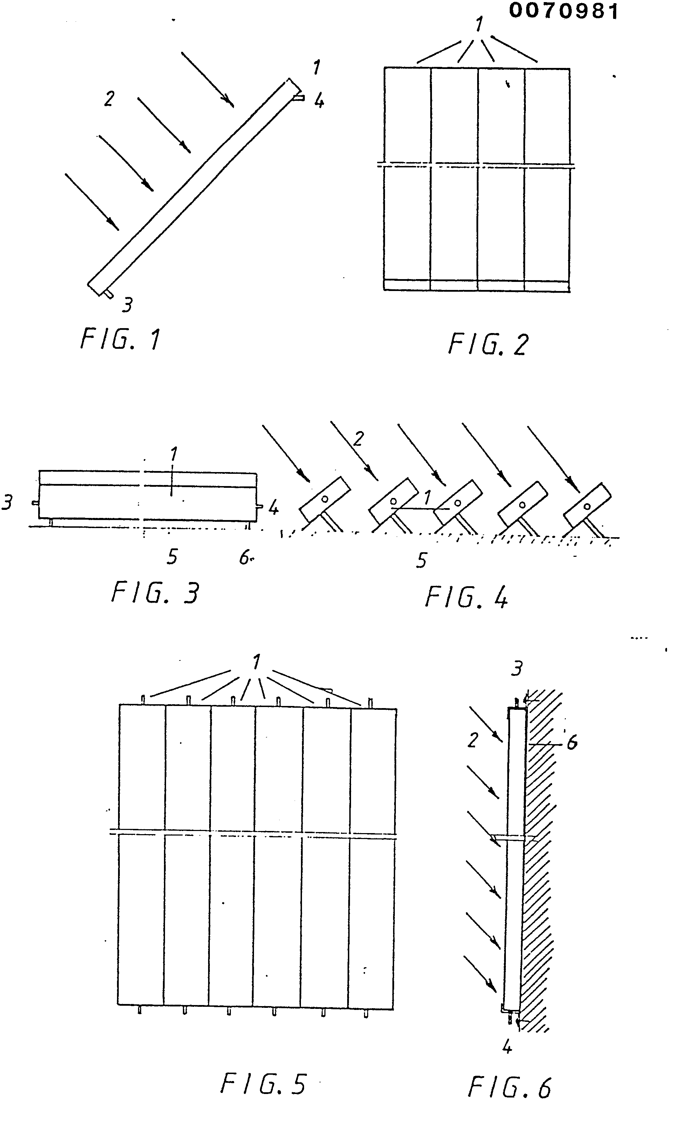

Fig. 1 zeigt schematisch die Anwendung bei einem Schrägdach in einer Seitenansicht und Fig. 2 in einer Ansicht von oben. Die schmalen und langgestreckten Einzelelemente (Kollektoren) 1 sind mit ihren Längsseiten aneinanderstoßend in Länge und Anzahl der benötigten oder verfügbaren Kollektorfläche angepaßt. Die Einzelelemente (Kollektoren) werden hierzu in der benötigten Anzahl in der entsprechenden Länge vorgefertigt. Die Länge kann bei einer an späterer Stelle beschriebenen Ausführung maximal bis zu 6 m betragen. Es lassen sich somit Kollektoren für die Mehrzahl der Formen und Größen von Dächern zusammenstellen.

Die Kollektoren können ganz oder zum Teil die Dacheindeckung bilden. Sie werden mittels Trägerkonsolen (in der
Figur nicht dargestellt) auf der Sparrenkonstruktion des
Dachstuhls befestigt und wasserfest abgedichtet.

Bei der an späterer Stelle beschriebenen Ausführung besteht die gesamte der Witterung ausgesetzte Fläche aus
unverrottbarem Glas erheblicher Stärke. Die hinter den
Absorbern, in Richtung der einfallenden Strahlung gesehen,
angebrachten Isolierschichten ergeben einen hohen Isolationswert für den darunterliegenden Raum.

Die in den Fig. 1 und 2 dargestellte Anordnung wird in
erster Linie bei nach Süden geneigten Dachflächen angewendet. Die Strahlung, symbolisiert durch die Pfeile 2, fällt
dann mehr oder weniger senkrecht zu den Absorbern in den
Kollektoren auf diese. Die Strahlungsenergie wird absorbiert und über die in den Dachraum geleiteten Anschlüsse
3 und 4 durch den flüssigen Wärmeträger abgeleitet.

Fig. 3 zeigt schematisch eine Ansicht auf die Längsseiten
und Fig. 4 auf die Schmalseiten der Kollektoren 1 für ein
Flachdach 5. Diese sind, jeder für sich, mittels der
Träger 6 in einer derartigen Lage auf der Dachfläche 5
befestigt, daß die Absorber in den Kollektoren wieder mehr
oder weniger senkrecht zur Richtung der einfallenden
Strahlung 2 stehen.

Als weiteres Anwendungsbeispiel ist schematisch in Fig. 5
die Anordnung der Einzelelemente 1 (Kollektoren) an einer
senkrechten Wand, z.B. einer Hausfassade, in einer Vorderansicht und in Fig. 6 in einer Seitenansicht dargestellt.
Die schmalen langgestreckten Einzelelemente (Kollektoren) 1
sind nebeneinander an der Wand 6 befestigt. Durch die
Wahl ihrer Länge und Anzahl sind sie an jede Fassadengröße anpaßbar und erfüllen als zusätzlichen Vorteil
außer ihrer eigentlichen Aufgabe auch die einer hochwertigen Isolierung der Wand und damit des Gebäudes.

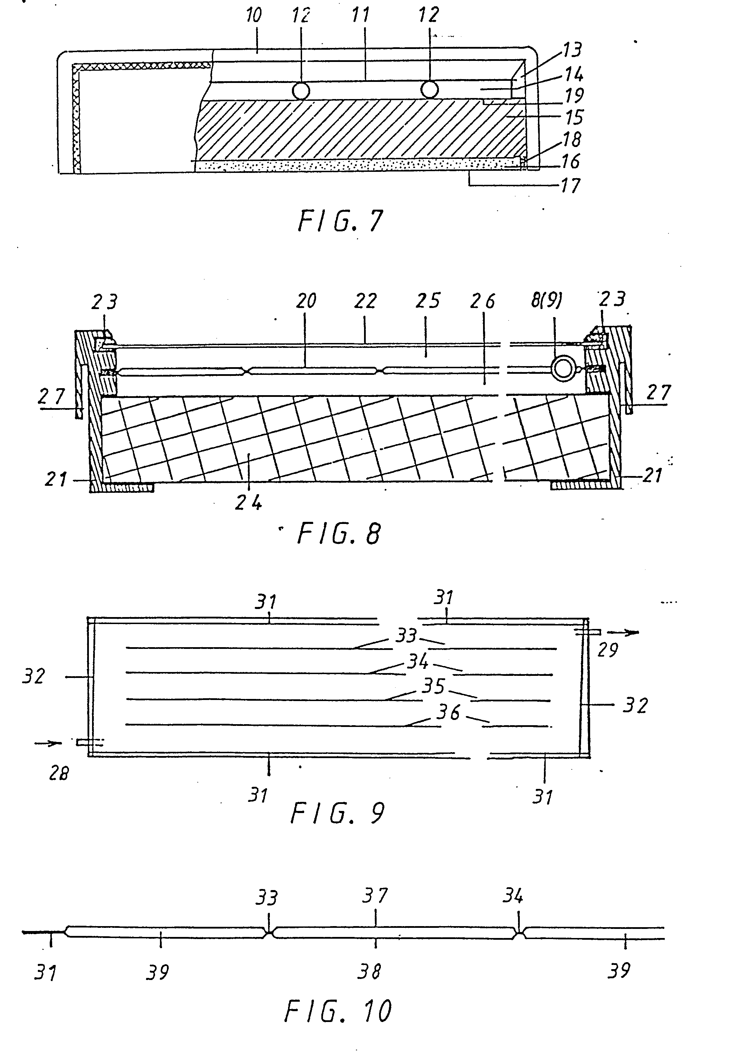

Fig. 7 zeigt ein Ausführungsbeispiel eines für das erfindungsgemäße System entwickelten Kollektors. Die transparente Platte auf der den Sonnenstrahlen zugewendeten Seite besteht im Verein mit den längsseitigen Teilen aus einem Stück eines transparenten Materials, vorzugsweise Glas, so daß sich ein einseitig offener Hohlkörper mit wannenförmigem Querschnitt ergibt. Dieser kann mit so geringer Breite ausgeführt sein, daß er bei entsprechender Stärke des transparenten Materials auch in größeren Längen selbsttragend ist. Bei einer bevorzugten Ausführung beträgt die Breite 230 mm bei einer Wandstärke der aus Glas bestehenden Wanne von 6 mm. Die dem Einzelfall bei der Fertigung angepaßte Länge kann 2,5 m bis maximal 6 m betragen.

In der Glaswanne 10, teilweise in einer Ansicht A und im Schnitt B dargestellt, ist der Absorber 11, vorzugsweise aus geschwärztem Kupferblech, enthalten. Mit dem Absorber 11 sind Rohre 12 gut wärmeleitend verbunden, z.B. verlötet, die von dem flüssigen Wärmeträger (Sole) durchströmt werden, welcher die Wärme vom Absorber 11 ableitet. Der Absorber 11 ist mittels Trägerleisten 13, vorzugsweise aus Kunststoff (EPDM), in der Glaswanne 10 befestigt.

Außer auf der den Sonnenstrahlen zugewendeten Vorderseite des Absorbers 11 und der Glaswanne 10 ist gemäß der Erfindung auch auf der von der Sonnenstrahlung abgewendeten Rückseite des Absorbers ein Luftspalt 14 zwischen der Rückseite der Absorberplatte 11 und einer Platte 19 vorgesehen, durch die Außenluft mit Hilfe von (in der Figur nicht dargestellten) Ventilatoren durchgeblasen werden kann. Der durch die Wärmepumpe gekühlte flüssige Wärmeträger und damit die Absorberplatte 11 kann somit den Wärmeinhalt der durchströmenden Außenluft gewinnen. Bei der Kondensation von Luftfeuchte am Absorber wird zusätzlich deren Kondensationswärme frei und absorbiert. Zur Verbesserung des Wärmeüberganges zwischen der Außenluft und dem Absorber 11 können in den Luftkanal 14 Schikanen eingebaut werden, welche die Oberfläche des Absorbers vergrößern und eine turbulente Luftströmung bewirken. Das im Grenzbereich am

- 9 -

0070981

Absorber gebildete Eis wird beim Einsetzen ausreichender Strahlung rasch abgebaut, das Kondenswasser kann durch Luftaustrittsöffnungen an der Stirnseite der Elemente abfließen. Hinter der Platte 19 ist der verbleibende Raum im Hohlkörper 10 mit wärmeisolierendem Material 15 und 16, z.B. Mineral- oder Glaswolle und Styropor, ausgefüllt und an der offenen Seite durch eine Platte 17, z.B. aus verzinktem Stahlblech, abgeschlossen, die am Hohlkörper 10 mittels Dichtleisten 18 befestigt und gegen diesen abgedichtet ist.

Die vorbeschriebene Bauweise ist besonders einfach und preiswert herzustellen, ist absolut dicht gegen atmosphärische Einflüsse und hat eine lange Lebensdauer.

Fig. 8 zeigt ein bevorzugtes Ausführungsbeispiel eines Kollektors für das erfindungsgemäße System im Querschnitt. Der an späterer Stelle noch genauer beschriebene Absorber 20 aus Edelstahl mit integrierten Kanälen zum Durchfluß des flüssigen Wärmeträgers ist an seinen längsseitigen Rändern durch Profilleisten 21, vorzugsweise aus Kunststoff, befestigt. Auf der der Strahlungsquelle zugewendeten Vorderseite ist der Kollektor durch eine transparente Platte 22, vorzugsweise aus Glas, abgeschlossen. Die transparente Platte 22 ist in Nuten 23 der Profile 21 gehalten und in den Nuten 23 abgedichtet. An der von der Strahlungsquelle abgewendeten Rückseite des Kollektors ist der Absorber 20 durch eine Isolierung gegen Wärmeverluste geschützt. Schließlich erkennt man noch einen der beiden Rohrstutzen 28 bzw. 29 für die Zu- bzw. Ableitung des flüssigen Wärmeträgers. Auf beiden Seiten des Absorbers 20 zwischen diesem und der transparenten Abdeckung 22 einerseits und der Isolierschicht 24 andererseits sind Luftkanäle (Luftspalte) über die ganze Breite des Absorbers 20 vorgesehen, durch die Außenluft mit Hilfe eines Ventilators durchgeblasen werden kann. Auf diese Weise kann der Absorber 20 in Verbindung mit einer Wärmepumpe gemäß dem erfindungsgemäßen System außer Strahlungsenergie auch den Wärmeinhalt der Außenluft und der Luftfeuchte aufnehmen.

In der Regel wird eine größere Anzahl der schmalen und
langgestreckten Kollektoren nebeneinander verwendet. Die
Montage ist an ebenen vertikalen Flächen, z.B. an Fassaden,
oder in Schrägdächern integriert möglich. Zur wasserfesten
Verbindung der mit ihren Längsseiten benachbarten Kollektoren sind in den Profilen 21 Längsschlitze 27 vorgesehen,
in die ein Schenkel einer (in der Figur nicht dargestellten) U-förmigen Verbindungsschiene eingeschoben werden
kann, und der andere Schenkel der Verbindungsschiene wird
in den Längsschlitz des benachbarten Kollektors eingesetzt.

Anstelle der Kunststoffprofile kann für den Aufbau des
Kollektors auch ein anderes korrosionsfestes Material verwendet werden.

Fig. 9 zeigt den im Kollektor nach Fig. 8 enthaltenen Absorber, zur Erhöhung der Deutlichkeit nicht in voller
Länge. Der Absorber ist aus zwei Blechen aus Edelstahl
aufgebaut, von denen man in der Draufsicht der Figur nur
die obere Blechplatte sieht. Unter dieser befindet sich
die zweite Platte gleicher Größe. An den Rändern sind die
beiden Edelstahlplatten durch Rollnahtschweißen verbunden
(Schweißnähte 31, 32). Ferner sind beide Edelstahlplatten
in gleichmäßigen Abständen durch schmale Stege 33, 34, 35,
36 verschweißt. Die Stege enden vor den Rändern 32, damit
Verbindungskanäle zwischen den in Längsrichtung verlaufenden Kanälen des Absorbers gebildet werden können. Durch
diese Verbindungskanäle wird der flüssige Wärmeträger, z.B.
eine Mischung aus Wasser und einem Frostschutzmittel, durch
eingeschweißte Rohrstutzen 28, 29 zu- bzw. abgeleitet.

Fig. 10 zeigt schließlich eine Teilansicht eines Querschnittes des Absorbers nach Fig. 9 in vergrößertem Maßstab (Originalgröße). Die beiden Edelstahlbleche 37 und 38
sind durch die Rundum-Dichtschweißung 31, 32 und durch die in Längsrichtung in gleichmäßigen Abständen verlaufenden Schweißstege 33, 34, 35, 36 geringer Breite, von z.B. 2 mm, verbunden.

Zur Bildung der Kanäle zum Durchfluß des Wärmeträgers werden die Bleche nach dem Verschweißen in eine massive Vorrichtung eingespannt, bei der in Position der Schweißstege Flacheisen, z.B. mit 1 mm Stärke, vorgesehen sind. Dann werden die Bleche zwischen den Schweißstegen auseinandergepreßt, indem ein Medium, z.B. Wasser, unter hohem Druck von z.B. 10 bar, über die Rohrstutzen (28, 29 in Fig. 9) eingeleitet wird. Auf diese Weise bilden sich die Kanäle 39 mit geringem Querschnitt, die in der Figur mit etwa den richtigen Proportionen dargestellt sind.

Die Breite des Absorbers richtet sich mit Vorteil nach den Abmessungen, mit denen Edelstahlbleche im Handel sind, um keinen Abfall der verhältnismäßig teuren Bleche zu haben. Z.B. können Edelstahlbleche von 0,5 mm Stärke nach DIN 4301 verwendet werden und die Breite der Absorber kann 333 mm betragen. Die Länge der Absorber ist beliebig, vorzugsweise beträgt sie bei dem beschriebenen Ausführungsbeispiel 3.000 mm.

Durch die ausschließliche Verwendung von Edelstahl für den Absorber und die Kanäle sind beide absolut korrosionsbeständig. Sie sind daher für alle Wärmeträger ohne Einschränkung verwendbar. Die Korrosionsfestigkeit der Außenseiten des Absorbers ist von besonderem Wert bei der erfindungsgemäßen Doppelausnutzung des Absorbers zur Wärmegewinnung aus Strahlung (direkte und diffuse Sonnenstrahlung) als auch aus der Umgebung durch Konvektion der am Absorber vorbeigeführten Außenluft. Der Absorber wird weder von der verschmutzten Luft und der in dieser enthaltenen Feuchtigkeit noch von der auf dem gekühlten Absorber kondensierten Flüssigkeit (z.B. durch Schwefelverbindungen verunreinigtes Wasser) angegriffen.

Ein in der beschriebenen Weise aufgebauter Absorber weist Vorteile in mechanischer und thermischer Hinsicht auf. Gegenüber einer ebenen Platte ist er erheblich knickfester und verwindungssteifer, was den Einbau in den Kollektoren vereinfacht. Gegenüber Absorbern mit wärmeleitend verbundenen Rohren oder Kanälen tritt praktisch kein Temperaturgefälle zwischen diesen und dem Absorber auf, da der Absorber vollflächig vom Wärmeträger durchströmt wird. Bei gleicher Erwärmung des Absorbers ist daher die Temperatur des Wärmeträgers höher und damit der Wirkungsgrad des Absorbers besser.

Zur weiteren Verbesserung des Wirkungsgrades beim Einsatz als Strahlungsabsorber kann, wie bekannt, eine gut absorbierende und gering emittierende Beschichtung vorgesehen sein, die entweder bereits auf den Edelstahlblechen vorhanden ist oder auf die fertigen Absorber aufgebracht wird.

Schließlich ist die Herstellung der Absorber und der Kanäle zum Durchfluß des Wärmeträgers in einem Arbeitsgang rationeller als bei anderen bekannten Bauarten, was sich in einer Senkung der Herstellungskosten auswirkt.

Bei ausreichender Strahlung, wenn der Kollektor somit als reiner Sonnenkollektor arbeitet, ist keine Strömung in den Luftspalten erwünscht, da diese eine Abkühlung der Absorber und somit einen Wärmeverlust ergeben würde. Um diesen zu vermeiden, können Klappen an der Eintrittsstelle für die Außenluft vorgesehen werden, die bei ausreichendem Strahlungsangebot geschlossen gehalten werden, z.B. durch Federkraft, und die beim Übergang des Betriebes als Luftabsorber geöffnet werden, z.B. durch den von den Ventilatoren erzeugten Überdruck an der Eintrittsstelle der Außenluft.

**0070981**

Patentansprüche
==================

1. System zur Wärmegewinnung aus Sonnenstrahlung mittels Kollektoren, welche Absorber enthalten, von denen die erzeugte Wärme durch einen flüssigen Wärmeträger abgeleitet wird, d a d u r c h   g e k e n n z e i c h - n e t , daß die langgestreckten schmalen Kollektoren auf der den Sonnenstrahlen zugewendeten Seite von einer transparenten Platte abgedeckt sind und sowohl auf der den Sonnenstrahlen zugewendeten, als auch auf der von den Sonnenstrahlen abgewendeten Seite der Absorber je einen in Längsrichtung verlaufenden, von Luft durchströmten Luftspalt aufweisen, der die vorbeigeführte Außenluft so führt, daß die Außenluft unmittelbar die Wände des Absorbers bestreicht, und daß eine Wärmepumpe vorgesehen ist, durch welche die niedrigere Temperatur des Wärmeträgers auf den erforderlichen Wert gebracht werden kann, wenn das Angebot der auf den Kollektor auftreffenden Sonnenstrahlung zur Erreichung der vorgesehenen Betriebstemperatur nicht ausreicht.

2. System nach Anspruch 1, gekennzeichnet durch einen Ventilator zur Erzeugung einer Luftströmung durch die Luftspalte des Kollektors und daß der Betrieb des Ventilators vorzugsweise nur bei eingeschalteter Wärmepumpe möglich ist.

3. System nach Anspruch 1, dadurch gekennzeichnet, daß die Strömung der Außenluft in den Luftspalten und die Strömung des flüssigen Wärmeträgers im Absorber in entgegengesetzten Richtungen verlaufen.

4. System nach Anspruch 1, dadurch gekennzeichnet, daß die Kollektoren aus selbsttragenden, einseitig offenen Hohlkörpern (10), vorzugsweise aus Glas oder Kunstglas entsprechender Stärke, mit wannenförmigem Querschnitt bestehen.

5. System nach Anspruch 1, dadurch gekennzeichnet, daß die vom Wärmeträger durchflossenen Kanäle aus Edelstahl bestehen und in den aus demselben Material bestehenden Absorber integriert und mit diesem aus einem Stück hergestellt sind, indem der Absorber zwei Edelstahlbleche aufweist und die Bleche an den Rändern und mit mehreren in Längsrichtung verlaufenden schmalen Stegen durch Verschweißen flüssigkeitsdicht und druckfest derart verbunden sind, daß zwischen den Stegen durch die Bleche begrenzte Hohlräume gebildet sind.

6. System nach Anspruch 5, dadurch gekennzeichnet, daß die in Längsrichtung verlaufenden Stege (33, 34, 35, 36) vor den Rändern (32) der Bleche enden und die Kanäle im Bereich zwischen den Enden der Stege und diesen Rändern kommunizieren und nur je ein Anschluß (28, 29) für die Zuleitung bzw. Ableitung des Wärmeträgers zum bzw. vom Absorber vorgesehen ist.

7. Kollektor für ein System nach Anspruch 1, dadurch gekennzeichnet, daß die Absorber an ihren Enden in ein Profil (21) eingesetzt sind und sowohl die der Sonnenseite zugewendete transparente Platte (22) als auch eine die Rückseite des Absorbers abdeckende Platte (24) aus wärmeisolierendem Material mit Abstand von dem Absorber in das Profil eingesetzt sind.

8. Verfahren zur Herstellung von Absorbern nach Anspruch 1 und 5, dadurch gekennzeichnet, daß die beiden Bleche nach dem Verschweißen in eine Vorrichtung gespannt und durch Einleiten eines unter Überdruck stehenden Mediums, vorzugsweise Wasser, zwischen die Bleche zur Bildung der als Kanäle dienenden Hohlräume auseinandergepreßt werden.

**0070981**

9.  System nach Anspruch 1, dadurch gekennzeichnet, daß an der Eintrittsstelle der Außenluft an der Schmalseite der Kollektoren Klappen vorgesehen sind, die bei ausreichendem Strahlungsangebot geschlossen und bei Einsetzen der Luftströmung geöffnet werden.

0070981

FIG. 1

FIG. 2

FIG. 3

FIG. 4

FIG. 5

FIG. 6

0070981

FIG. 7

FIG. 8

FIG. 9

FIG. 10

Europäisches
Patentamt

# EUROPÄISCHER RECHERCHENBERICHT

EP 82104071.4

| Kategorie | EINSCHLÄGIGE DOKUMENTE | | KLASSIFIKATION DER ANMELDUNG (Int. Cl.) |
|---|---|---|---|
| | Kennzeichnung des Dokuments mit Angabe, soweit erforderlich, der maßgeblichen Teile | betrifft Anspruch | |
| X | DE - A1 - 2 932 799 (KLEINWÄCHTER) <br> + Anspruch 1; Seite 5, 4. Abs.; Abb. 2; Abb. 4, Teil 1; Anspruch 4 + <br> -- | 1,2,4, 7,9 | F 24 J 3/02 |
| A | CH - A5 - 579 955 (STUDER) <br> + Gesamt + <br> -- | 5,6,8 | |
| A | FR - A - 2 202 264 (AGENCY OF INDUSTRIAL) <br> + Seite 6, Zeile 27 + <br> -- | 5 | RECHERCHIERTE SACHGEBIETE (Int. Cl.) |
| A | FR - A - 1 601 101 (ESCONDEUR) <br> + Seite 2, Zeile 35 + <br> -- | 5 | F 24 J |
| A | AT - B - 358 778 (HÖCHST) <br> + Fig. 2 + <br> -- | 6 | |
| A | AT - B - 352 354 (STACHETSBERGER) <br> + Blatt 1 + <br> ---- | 4 | |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

| X | Der vorliegende Recherchenbericht wurde für alle Patentansprüche erstellt |
|---|---|

| Recherchenort | Abschlußdatum der Recherche | Prüfer |
|---|---|---|
| WIEN | 30-07-1982 | SCHMIDT |